# EUROPEAN PATENT APPLICATION

(11) **EP 2 908 281 A1**
(43) Date of publication of application: **19.08.2015**
(21) Application number: 13846062.1
(22) Date of filing: 15.05.2013
(51) Int. Cl.: G06Q 50/10, G06Q 30/02

(54) **PRODUCT INFORMATION PROVISION SYSTEM, PRODUCT INFORMATION PROVISION DEVICE, AND PRODUCT INFORMATION OUTPUT DEVICE**

(30) Priority: 12.10.2012 JP 2012227502; 01.12.2012 JP 2012263896
(71) Applicant: Kaneko, Kazuo, Kanagawa 211-0007 (JP)
(72) Inventor: Kaneko, Kazuo, Kanagawa 211-0007 (JP)
(74) Representative: Garavelli, Paolo
(86) International application number: PCT/JP2013/063490
(87) International publication number: WO 2014/057704

(57) **Abstract**

To provide product information to a user.

A product information providing system 10 is a product information providing system in which a product information providing device whichprovides product information and a product information outputting device which receives the product information from the product information providing device to output are connected to each other through a communication line, wherein the product information outputting device includes product specifying image obtaining means for photographing a subject for specifying a product to obtain a product specifying image based on an instruction by a user, product information requesting means for transmitting the product specifying image obtained by the product specifying image obtaining means to the product information providing device to request product information of a product specified based on the product specifying image, product information receiving means for receiving the product information from the product information providing device, product information presenting means for outputting the product information received by the product information receiving means to present to the user, question data obtaining means for obtaining question data from the user about the product information output by the product information presenting means, answer requesting means for transmitting the question data obtained by the question data obtaining means to the product information providing device to request an answer to a question, answer receiving means for receiving answer data to the question from the product information providing device, and answer data outputting means for outputting the answer data received by the answer receiving means, and the product information providing device includes product specifying image receiving means for receiving the product specifying image from the product information outputting device, product specifying means for performing image processing of the product specifying image received by the product specifying image receiving means to specify the product whose product information the user wants to obtain, product information reading means for reading the product information of the product specified by the product specifying means from the product information recorded on a recording device in advance, product information transmitting means for transmitting the product information read by the product information reading means to the product information outputting device, question data receiving means for receiving the question data from the product information outputting device, question content specifying means for specifying a question content from the user based on the question data received by the question data receiving means, answer data reading means for reading the answer data recorded in association with the question content specified by the question content specifying means from information for response in which information indicating a supposed question content from the user and the answer data to the question are associated with each other recorded on the recording device in advance, and answer data transmitting means for transmitting the answer data read by the answer data reading means to the product information outputting device.

## Description

### Technical Field

The present invention relates to a product information providing system, a product information providing device, and a product information outputting device.

### Background Art

A following product retrieving system is known. When a terminal device requests to retrieve a product by using an image pattern of a product to be retrieved, the product retrieving system transmits product recognizing information specified by matching the image pattern and a standard pattern of a product stored in advance in a database by a first server device to a second server device through a communication network, and the second server device extracts product information about a product specified by the product recognizing information from the information about the product stored in the database in advance in response to reception of the product recognizing information and transmits the same to the terminal device through the first server device (see Patent Literature 1).

### Citation List

### Patent Literature

Patent Literature 1: JP 2006-31200 A

### Summary of Invention

### Technical Problem

However, in the conventional product retrieving system, the terminal device merely displays a received retrieval result of the product information on a display unit. Therefore, even when the user has a point in doubt or a point to be checked about the product, means for solving the same is not provided.

### Solution to Problem

According to a first aspect of the present invention, a product information providing system is a product information providing system in which a product information providing device which provides product information and a product information outputting device which receives the product information from the product information providing device to output are connected to each other through a communication line, wherein the product information outputting device includes product specifying image obtaining means for photographing a subject for specifying a product to obtain a product specifying image based on an instruction by a user, product information requesting means for transmitting the product specifying image obtained by the product specifying image obtaining means to the product information providing device to request product information of a product specified based on the product specifying image, product information receiving means for receiving the product information from the product information providing device, product information presenting means for outputting the product information received by the product information receiving means to present to the user, question data obtaining means for obtaining question data from the user about the product information output by the product information presenting means, answer requesting means for transmitting the question data obtained by the question data obtaining means to the product information providing device to request an answer to a question, answer receiving means for receiving answer data to the question from the product information providing device, and answer data outputting means for outputting the answer data received by the answer receiving means, and the product information providing device includes product specifying image receiving means for receiving the product specifying image from the product information outputting device, product specifying means for performing image processing of the product specifying image received by the product specifying image receiving means to specify the product whose product information the user wants to obtain, product information reading means for reading the product information of the product specified by the product specifying means from the product information recorded on a recording device in advance, product information transmitting means for transmitting the product information read by the product information reading means to the product information outputting device, question data receiving means for receiving the quest ion data from the product information outputting device, question content specifying means for specifying a question content from the user based on the question data received by the question data receiving means, answer data reading means for reading the answer data recorded in association with the question content specified by the question content specifying means from information for response in which information indicating a supposed question content from the user and the answer data to the question are associated with each other recorded on the recording device in advance, and answer data transmitting means for transmitting the answer data read by the answer data reading means to the product information outputting device.

According to a second aspect of the present invention, in the product information providing system according to the first aspect, it is preferable that the product information outputting device further includes data setting means for setting a data format out of voice data and text data in which the question about the product information output by the product information presenting means is accepted based on an instruction by the user, the question data obtaining means obtains the question data in the data format set by the data setting means, and the answer requesting means transmits the question data obtained by the question data obtaining means to the product information providing device to request the answer to the question in the data format set by the data setting means.

According to a third aspect of the present invention, in the product information providing system according to the second aspect, it is preferable that information for response in a voice data format for responding to the question by the voice data and information for response in a text data format for responding to the question by the text data are recorded on the recording device, and the answer data reading means selects the information for response corresponding to the data format of the question data to read the answer data recorded in association with the question content specified by the question content specifying means from the selected information for response.

According to a fourth aspect of the present invention, in the product information providing system according to the third aspect, it is preferable that the product information providing device further includes synchronizing means for synchronizing the information for response in the voice data format with the information for response in the text data format recorded on the recording device.

According to a fifth aspect of the present invention, in the product information providing system according to the second aspect, it is preferable that any one of information for response in a voice data format for responding to the question by the voice data and information for response in a text data format for responding to the question by the text data is recorded on the recording device, and when the data format of the question content specified by the question content specifying means is different from the data format of the information for response, the answer data reading means converts the data format of the question content to the data format of the information for response and reads the answer data recorded in association with the question content specified by the question content specifying means from the information for response.

According to a sixth aspect of the present invention, in the product information providing system according to any one of the first to fifth aspects, it is preferable that the question content specifyingmeans transmits data of the specifiedquestion content to the product information outputting device and fixes the specified question content when receiving information indicating that the specified question content is correct from the product information outputting device.

According to a seventh aspect of the present invention, in the product information providing system according to any one of the first to sixth aspects, it is preferable that the product information providing device further includes response history information recording means for recording history information of response data in which the question data received from the product information outputting device and the answer data to the question data are associated with each other on the recording device, and when the question data is recorded on the recording device as the history information, the answer data reading means preferentially reads the answer data from the history information.

According to an eighth aspect of the present invention, in the product information providing system according to the seventh aspect, it is preferable that the product information providing device further includes satisfaction level information receiving means for receiving information indicating a satisfaction level of the user with the transmitted answer data from the product information outputting device, and priority setting means for setting reading priority of the answer data based on the information indicating the satisfaction level received by the satisfaction level information receiving means, the response history information recording means records information indicating the reading priority of the answer data set by the priority setting means on the recording device in association with the response data, and the answer data reading means preferentially reads the answer data whose priority is set high when the question data is recorded on the recording device as the history information.

According to a ninth aspect of the present invention, in the product informationproviding system according to the seventh or eighth aspect, it is preferable that the response history information recording means records the history information of the response data for each user.

According to a tenth aspect of the present invention, in the product information providing system according to any one of the seventh to ninth aspects, it is preferable that the product information providing device further includes history information transmitting means for transmitting the history information recorded on the recording device to a terminal possessed by a company which provides the product about which the question is asked.

According to an eleventh aspect of the present invention, in the product information providing system according to any one of the first to tenth aspects, it is preferable that the product information providing device further includes dialogue means for establishing communication between a destination terminal registered in advance and the product information outputting device to start communication by voice or by text between an operator of the destination terminal and the user when the answer data recording means cannot read the answer data recorded in association with the question content specified by the question content specifying means.

According to a twelfth aspect of the present invention, in the product information providing system according to the eleventh aspect, it is preferable that the product information providing device further includes communication content recording means for recording a communication content by voice or by text between the operator of the destination terminal and the user on the recording device.

According to a thirteenth aspect of the present invention, in the product information providing system according to any one of the first to twelfth aspects, it is preferable that the product information providing device further includes determining means for determining whether the answer to the question content from the user specified by the question content specifying means is included in the product information transmitted by the product information transmitting means, and when the determining means determines that the answer is included in the product information, the answer data reading means reads data for providing notification that the answer to the question content is included in the product information from the recording device as the answer data.

According to a fourteenth aspect of the present invention, in the product information providing system according to any one of the first to thirteenth aspects, it is preferable that the product information outputting device further includes first vision displaying means for displaying vision of a person in adisplaydevice, and operation controlling means for controlling operation of person vision as if the person vision displayed by the first vision displaying means talks of the answer data.

According to a fifteenth aspect of the present invention, in the product information providing system according to any one of the first to fourteenth aspects, it is preferable that the product information outputting device further includes second vision displaying means for displaying stereoscopic vision of a person in a real space, and operation controlling means for controlling operation of the person of the stereoscopic vision as if the person of the stereoscopic vision displayed by the second vision displaying means talks of the answer data.

According to a sixteenth aspect of the present invention, in the product information providing system according to any one of the first to fifteenth aspects, it is preferable that the product information providing device further includes order accepting means for accepting an order for the product specified by the product specifying means from the product information outputting device.

According to a seventeenth aspect of the present invention, in the product information providing system according to the sixteenth aspect, it is preferable that the product information providing device further includes payment information transmitting means for transmitting payment information for paying for an ordered product to the product information outputting device based on a content of an accepted order for the product when the order accepting means accepts the order for the product, and the product information outputting device further includes payment screen displaying means for displaying a payment screen of the product ordered by the user on the display device based on the payment information received from the product information providing device.

According to an eighteenth aspect of the present invention, in the product information providing system according to any one of the first to seventeenth aspects, it is preferable that the product information outputting device is a terminal installed in a store which sells the product or a portable terminal possessed by the user.

According to a nineteenth aspect of the present invention, in the product information providing system according to any one of the first to eighteenth aspects, it is preferable that the product specifying image is any one of an image in which a character string for specifying the product is the subject for specifying the product, an image in which a figure for specifying the product is the subject for specifying the product, an image in which the product itself is the subj ect for specifying the product, an image in which a solid object representing the product is the subject for specifying the product, and an image in which an installation on which a figure representing a shape of the product is drawn is the subj ect for specifying the product, and the product specifying means specifies the product whose product information the user wants to obtain by extracting the subject for specifying the product from the product specifying image by performing image processing of the product specifying image and matches the subj ect to subj ect data recorded in advance.

According to a twentieth aspect of the present invention, in the product information providing system according to any one of the first to nineteenth aspects, it is preferable that the product information includes at least one of price information of the product, specification information of the product, availability information of the product, delivery time information of the product, comparison information indicating a result obtained by comparing the product with another product, 3D CAD data of the product, information of campaign performed for the product, website information of the product, and commercial video information of the product.

According to a twenty-first aspect of the present invention, in the product information providing system according to the twentieth aspect, it is preferable that the product information providing device further includes store list request accepting means for accepting a transmission request of a list of stores having the product in stock from the product information outputting device, product-carrying store specifying means for specifying a store carrying the product based on the availability information of the product when the transmission request of the list of stores is accepted by the store list request accepting means, and store list transmitting means for transmitting a list of stores specified by the product-carrying store specifying means to the product information outputting device.

According to a twenty-second aspect of the present invention, in the product information providing system according to any one of the first to twenty-first aspects, it is preferable that when the question content specifying means extracts a plurality of candidates of the question content from the user based on the question data received by the question data receiving means, the question content specifying means presents the plurality of candidates in order to the user based on order of priority of the plurality of candidates and specifies the question content from the user based on a response of the user to the candidates.

According to a twenty-third aspect of the present invention, the product information providing device is the product information providing device according to any one of the first to twenty-second aspects.

According to a twenty-fourthaspect of the present invention, the product information outputting device is the product information outputting device according to any one of the first to twenty-second aspects.

### Advantageous Effects of Invention

According to the present invention, the user may ask a question by voice or by text about the product information presented on the product information outputting device to obtain an answer thereto, so that the user may solve a point in doubt about the product information and check a point to be checked easily on site.

### Brief Description of Drawings

Fig. 1 is a block diagram of a configuration of one embodiment of a product information providing system 10.
Fig. 2 is a block diagram of a configuration of one embodiment when a server device is used as a product information providing device 100.
Fig. 3 is a block diagram of a configuration of one embodiment when a tablet terminal is used as a product information outputting device 200.
Fig. 4 is a flowchart of a flow of a product information registering process executed by the product information providing device 100.
Fig. 5 is a flowchart of a flow of a product information providing process executed by the product information providing device 100.
Fig. 6 is a flowchart of a flow of a product information outputting process executed by the product information outputting device 200.
Fig. 7 is a flowchart of a flow of a questioning process executed by the product information outputting device 200 in a first embodiment.
Fig. 8 is a flowchart of a flow of anansweringprocess executed by the product information providing device 100 in the first embodiment.
Fig. 9 is a flowchart of a flow of a questioning process executed by a product information outputting device 200 in a second embodiment.
Fig. 10 is a flowchart of a flow of an answering process executed by a product information providing device 100 in the second embodiment.

### Description of Embodiments

### First Embodiment

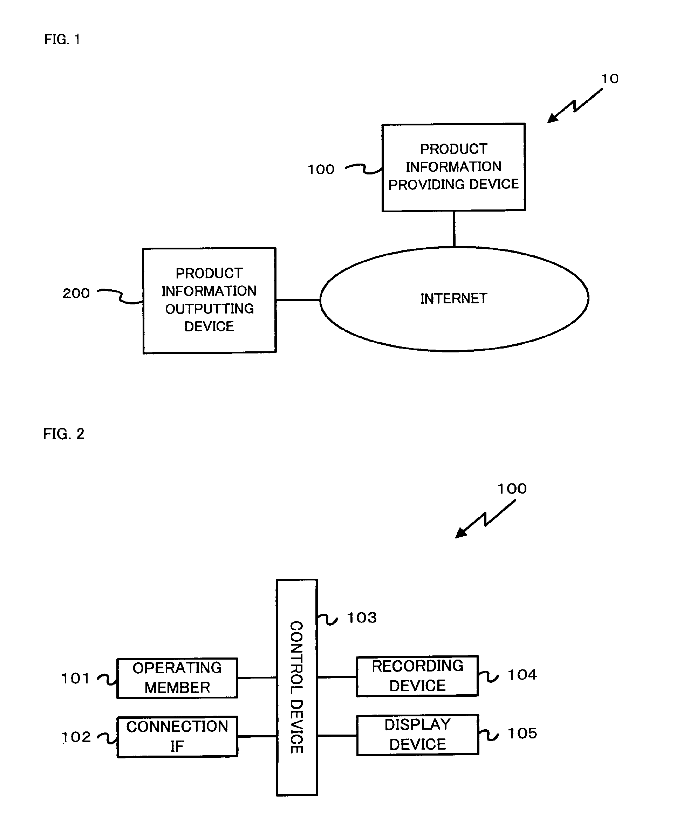

Fig. 1 is a block diagram of a configuration of one embodiment of a product information providing system of this embodiment. In a product information providing system 10, a product information providing device 100 on which product information is recorded and a product information outputting device 200 which receives the product information from the product information providing device 100 and outputs the same to a user are connected to each other through a communication line such as the Internet.

A server device and the like is used, for example, as the product information providing device 100. A variety of information terminals such as a smartphone, a cellular-phone, and a tablet terminal are used in addition to a personal computer (hereinafter, referred to as a "PC"), for example, as the product information outputting device 200. Meanwhile, although an example in which one product information providing device 100 and one product information outputting device 200 are connected to the Internet is described in this embodiment, the number of the devices is not limited.

Fig. 2 is a block diagram of a configuration of one embodiment in a case in which the server device is used as the product information providing device 100 of this embodiment. The product information providing device 100 is provided with an operating member 101, a connection IF 102, a control device 103, a recording device 104, and a display device 105.

The operating member 101 includes a variety of devices such as a keyboard and a mouse operated by an operator of the product information providing device 100.

As the connection IF 102 being an interface for connecting the product informationproviding device 100 to the communication line such as the Internet, a wired LAN module for connecting to the Internet by wire and a wireless LAN module for connecting to the Internet by air are used, for example.

The control device 103 includes a CPU, a memory, and other peripheral circuits to control an entire product information providing device 100. Meanwhile, the memory forming the control device 103 is a volatile memory such as a SDRAM, for example. The memory is used as a working memory for expanding a program when the CPU executes the program and a buffer memory for temporarily recording data. For example, the data read through the connection IF 102 is temporarily recorded on the buffer memory.

As the recording device 104 being a recording device for recording a variety of data accumulated by the product information providing device 100, data of the program to be executed by the control device 103 and the like, a HDD (hard disk drive), an SSD (solid state drive) and the like are used, for example. Meanwhile, the data of the program recorded on the recording device 104 is provided in a state recorded on a recording medium such as a CD-ROM and a DVD-ROM or provided through a network and the control device 103 may execute the program when a user installs the obtained data of the program on the recording device 104.

The display device 105 is a liquid crystal monitor, for example, on which a variety of display data output from the control device 103 are displayed.

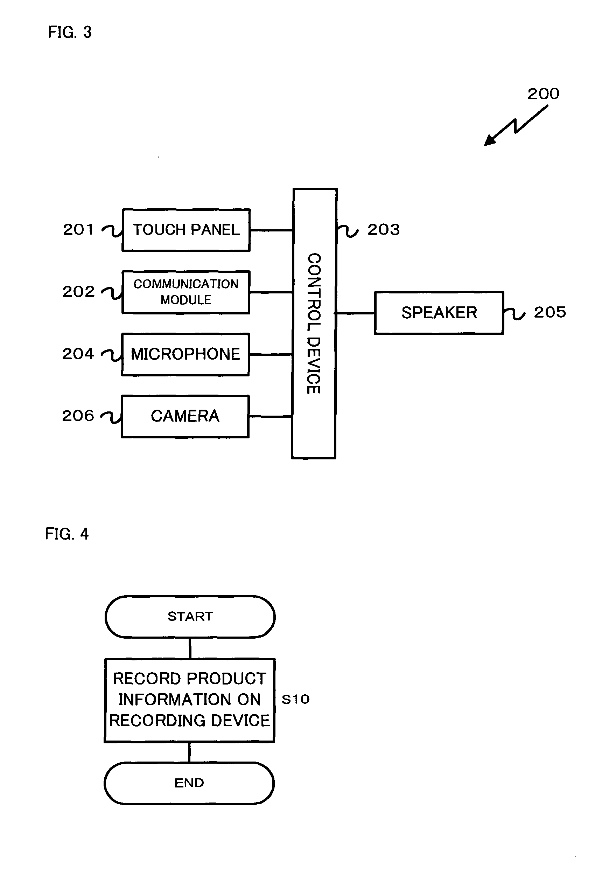

Fig. 3 is a block diagram of a configuration of one embodiment in a case in which the tablet terminal is used as the product information outputting device 200 of this embodiment. The product information outputting device 200 is provided with a touch panel 201, a communication module 202, a control device 203, a microphone 204, a speaker 205, and a camera 206.

The touch panel 201 being an electronic component obtained by combining a display device such as a liquid crystal panel and a position inputting device such as the touch pad is an inputting device capable of operating a device by a touch of a display on a screen. For example, the user of the product information outputting device 200 may operate the product information outputting device 200 by touching or sliding a display item such as a button and a menu displayed on the liquid crystal panel with a finger and a touch pen. The touch panel 201 detects the operation such as the touch and slide by the user and outputs a detection signal thereof to the control device 203.

A module for connecting to the Internet through the LAN and a cellular-phone communication network by air or by wire is used as the communication module 202. The product information outputting device 200 communicates with the product information providing device 100 through the communication module 202.

The control device 203 includes a CPU, a memory and other peripheral circuits to control an entire product information outputting device 200. Meanwhile, the memory forming the control device 203 includes the volatile memory such as the SDRAM and a non-volatile memory such as a flash memory, for example. The volatile memory is used as the working memory for expanding the program when the CPU executes the program and the buffer memory for temporarily recording the data. Program data of firmware for allowing the product information outputting device 200 to operate and software for allowing a varietyof applications to operate are recorded on the non-volatile memory.

In this embodiment, an application necessary for communicating with the product information providing device 100 in advance to request transmission of the product information and receive the product information (hereinafter, referred to as a "product information application") is installed in advance on the product information outputting device 200. A process executed by the control device 203 upon activation of the product information application is to be described later.

The microphone 204 is a sound collecting device for inputting uttered voice by the user and the speaker 205 is an outputting device for outputting voice.

The camera 206 is a well-known image-taking device including a lens, an imaging element, and other peripheral circuits. The user may photograph by using the camera 206 by activating a photographing application on the product information outputting device 200.

In the product information providing system 10 of this embodiment, a product information provider who provides the product information accesses to the product information providing device 100 from a terminal not illustrated to register the product information on the product information providing device 100. Accordingly, the product information is released by the product information providing device 100 and the user may receive the product information by operating the product information outputting device 200. Meanwhile, companies such as a manufacturer which manufactures a product and a dealer which sells the product, and a company which provides a service are supposed as the provider of the product information. A consumer who wants to purchase the product and a consumer interested in the product are supposed as the user who receives the product information.

Hereinafter, a content of a process performed by the product information providing device 100 and the product information outputting device 200 in the product informationproviding system 10 of this embodiment is mainly described.

A registration process of the product information on the product information providing device 100 is first described. The product information provider inputs a variety of information regarding the product manufactured or sold by the provider's company as the product information on the terminal not illustrated. The product information includes at least one of product specifying information for specifying the product, price information of the product, specification information of the product, availability information of the product, delivery time information of the product, comparison information indicating a result of comparison between the product and another product, 3D CAD data of the product, information of a campaign for the product, website information of the product, and commercial video information of the product, for example.

Meanwhile, as the product specifying information, a product name, a product number, a product ID and the like are used, for example, as information for uniquely specifying the product. As the availability information of the product, the availability information of the product in a store in which the product information outputting device 200 is installed, the availability information of the product in the manufacturer which manufactures the product, the availability information of the product in a delivery center being a sender of the product and the like are recorded. As the delivery time information of the product, the delivery time information of the product in the store in which the product information outputting device 200 is installed, the delivery time information of the product in the manufacturer which manufactures the product, the delivery time information of the product in the delivery center being the sender of the product and the like are recorded.

Data of the product information input on the terminal not illustrated is transmitted to the product information providing device 100 through the communication line by a process executed by a control device not illustrated included in the terminal.

In the product information providing device 100, when the control device 103 receives the data of the product information transmitted from the terminal operated by the product information provider, this records the received data on the recording device 104. Accordingly, the product information input by the product information provider is registered on the product information providing device 100.

The product information provider may optionally change the product information registered on the product information providing device 100 by operating the terminal not illustrated. That is to say, when the product information provider modifies the product information on the terminal, data of changed product information is transmitted to the product information providing device 100, and in the product information providing device 100 which receives the same, the control device 103 updates the product information recorded on the recording device 104 to a modified content.

When the product information is registered on the product information providing device 100 in this manner, the user may operate the product information outputting device 200 to browse the product information of the product which he/she considers to purchase or the product which he/she is interested in. For example, in the store which sells the product whose product information is provided by the product information providing device 100, the product information outputting device 200 is installed in store front. The user who visits the store may operate the installed product information outputting device 200 to check the product information of the product which he/she wants to purchase or the product which he/she is interested in.

Specifically, the user first operates the product information outputting device 200 to activate the above-described product information application. Upon instruction to activate the product information application, the control device 203 displays an application screen on the touch panel 201 to stand by for the operation by the user on the application screen. When the user wants to obtain the product information from the product information providing device 100, it is necessary to transmit information for specifying the product to the product information providing device 100 to request the product information.

In this embodiment, when the user issues an instruction to obtain the product information on the application screen, the control device 203 activates a photographing function using the camera 206 to prompt the user to photograph a subject for specifying the product. The user selects (A) a character string for specifying the product such as the product name, a product code, and the product number, (B) a figure for specifying the product such as an illustration of the product, a photograph shown in an advertisement, and a drawing, (C) the product itself shown or displayed in the store, (D) a stereoscopic object representing the product such as a model and a sample of the product, (E) an installation on which a figure representing a shape of the product is drawn such as an advertising sign and an advertising poster installed in the store and the like as the subject for specifying the product to photograph.

When the user takes a photograph, the control device 203 captures image data output from the camera 206 and transmits the same to the product information providing device 100 through the communication module 202.

In the product information providing device 100, when the control device 103 receives the image data obtained by photographing the subject for specifying the product from the product information outputting device 200, this performs a subject extracting process of the received image data to extract an image of the subject for specifying the product from the image. Meanwhile, since the process for extracting the subject image herein executed is a well-known process, a detailed description thereof is omitted; a method of extracting an edge from the image to extract the subject image from the image based on a shape of the extracted edge and the like may be used, for example.

The control device 103 specifies the subject shown in the image data received from the product information outputting device 200 by matching the extracted subject image to an image for specifying the product recorded on the recording device 104 inadvance. As the image for specifying the product , the provider of the product information may photograph an object which might be selected by the user as the subject for specifying the product in advance and record the same on the recording device 104, for example.

The control device 103 specifies the product corresponding to the subject photographed by the user based on the subject specified by a matching process. For example, the above-described product specifying information is associated with the image for specifying the product used in the matching on the recording device 104 and the control device 103 specifies the product by extracting the product specifying information associated with the product specifying image matched to the subject as a result of the matching.

The control device 103 reads the product information with the product specifying information identical to the specified one from the recording device 104 and transmits the same to the product information outputting device 200. Accordingly, the product information of the product specif ied based on the subject photographed by the product information outputting device 200 is transmitted to the product information outputting device 200.

In the product information outputting device 200, the control device 203 outputs to display the received product information on the touch panel 201. Accordingly, the user may check the product information of the product which he/she is interested in or the product which he/she considers to purchase on the product information outputting device 200.

Meanwhile, when the product cannot be specified because the subject cannot be extracted from the received image data, the control device 103 of the product information providing device 100 transmits an error message indicating that the product cannot be specified to the product information outputting device 200. In the product information outputting device 200, when the control device 203 receives the error message from the product information providing device 100, this notifies the user of the received error message by outputting to display the same on the touch panel 201 or outputting the same through the speaker 205.

In this embodiment, when the user wants to ask a question about the product such as when the user has a point in doubt about the product information displayed on the touch panel 201, when the user has a point to be checked, or when the information is not sufficiently obtained only from the displayed product information, he/she may ask the product information providing device 100 the question. For example, a button to issue an instruction to start the question is displayed together with the product information on the touch panel 201 and the user may touch the button to ask the question.

When the instruction to start the question is issued by the user, the control device 203 starts standing by for a voice input through the microphone 204. At that time, the control device 203 may display an indication to prompt the user to utter the question on the touch panel 201 or output a voice message.

When the control device 203 detects that the input of question voice by the user through the microphone 204 is started, this records input voice data on the buffer memory and thereafter transmits the same to the product information providing device 100 through the communication module 202.

In the product information providing device 100, when the control device 103 detects that the voice data of the question is received from the product information outputting device 200, this records the received voice data on the buffer memory and thereafter specifies a question content from the voice data by using well-known voice recognition technology. For example, a standby word for voice recognition is recorded on the recording device 104 in advance and the control device 103 executes a voice recognition process using the standby word for the voice data recorded on the buffer memory. As a result of matching to the standby word, a word included in the question content is extracted and the question content from the user is specified.

The control device 103 performs an answering process to the user according to the specified question content of the user. For example, information for response in which a supposed question content from the user and voice data of an answer to the same are associated with each other is recorded on the recording device 104 and when the specified question content is recorded on the recording device 104, the control device 103 reads the voice data of the answer recorded in association with the question content to transmit to the product information outputting device 200. Meanwhile, if the voice data of the answer recorded in association with the supposed question content from the user is voice data of an answer content inwhicha customer-care technique at a department store and a conversation technique of a top salesperson are introduced, this may improve a customer satisfaction level.

In the product information outputting device 200, when the control device 203 receives the voice data of the answer from the product information providing device 100, this outputs the received voice data through the speaker 205. Accordingly, the user may obtain the answer to the question from the product information providing device 100, thereby solving the point in doubt and the like.

The control device 103 of the product information providing device 100 records response data in which the voice data of the question recorded on the buffer memory and the voice data of the answer to the question are associated with each other on the recording device 104. Accordingly, a history of the response data is accumulated in the recording device 104. The provider of the product information and a provider of the product information providing system 10 may grasp a question trend of the user about the product and the product information by referring to the history of the response data recorded on the recording device 104, so that they may improve the content of the product information such that the user does not have to ask a question.

On the other hand, when the specified question content is not recorded on the recording device 104 or when the question content cannot be specified as a result of the voice recognition process, the control device 103 of the product information providing device 100 transmits the error message indicating that voice recognition cannot be performed or that the question content cannotbe specif iedto the product information outputting device 200. In the product information outputting device 200, when the control device 203 receives the error message from the product information providing device 100, this notifies the user of the received error message by outputting to display the same on the touch panel 201 or outputting the same through the speaker 205. Accordingly, the user may understand that the answer cannot be obtained from the product information providing device 100.

In this case also, the control device 103 associates the voice data of the question recorded on the buffer memory and data indicating that the question cannot be answered with each other and records them on the recording device 104. Accordingly, the provider of the product information and the provider of the product information providing system 10 may grasp a history of the questions which cannot be answered, so that they may improve voice recognition accuracy by reviewing the standby word and reviewing the voice recognition process and may upgrade the system such that this may respond to more questions by adding the supposed questions and the answers thereto.

Fig. 4 is a flowchart of a flow of a product information registering process executed by the product information providing device 100 of this embodiment. The process illustrated in Fig. 4 is executed by the control device 103 as a program activated when the above-described product information is received from the terminal not illustrated operated by the product information provider.

In step S10, the control device 103 records the product information received from the terminal not illustrated on the recording device 104. Thereafter, the process is finished.

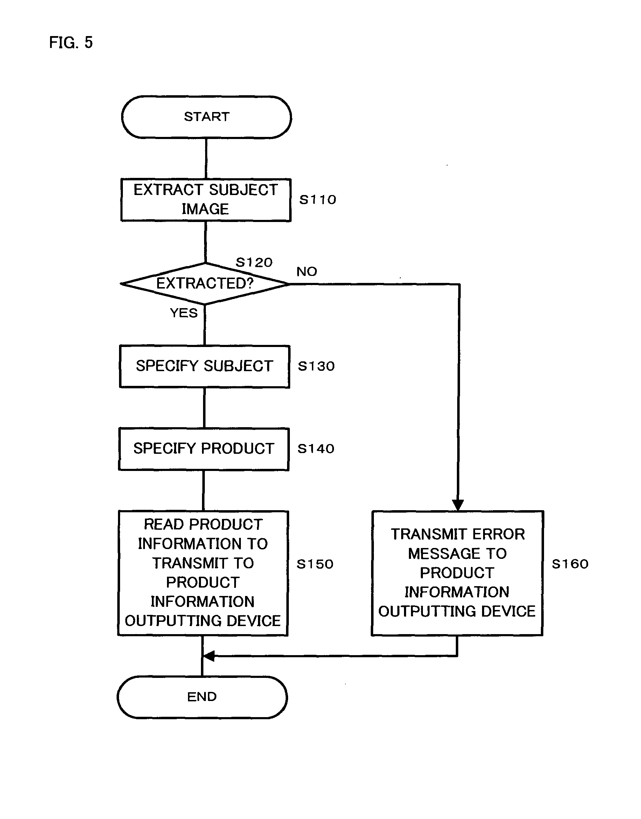

Fig. 5 is a flowchart of a flow of a product information providing process executed by the product information providing device 100 of this embodiment. The process illustrated in Fig. 5 is executed by the control device 103 as a program activated when the above-described image data obtained by photographing the subject for specifying the product is received for request of the product information from the product information outputting device 200.

In step S110, the control device 103 performs the subject extracting process of the received image data to extract the subject image for specifying the product from the image as describedabove. Thereafter, the procedure shifts to step S120.

In step S120, the control device 103 determines whether the subject image is extracted from the image as a result of the subject extracting process in step S110. When it is negatively determined in step S120, the procedure shifts to step S160 and the control device 103 transmits the error message indicating that the product cannot be specified to the product information outputting device 200 to finish the process. On the other hand, when it is positively determined in step S120, the procedure shifts to step S130.

In step S130, the control device 103 specifies the subject shown in the image data received from the product information outputting device 200 by matching the extracted subject image to the image for specifying the product recorded on the recording device 104 in advance as described above. Thereafter, the procedure shifts to step S140.

In step S140, the control device 103 specifies the product by extracting the product specifying information associated with the product specifying image matched to the subject as a result of the matching as described above and the procedure shifts to step S150.

In step S150, the control device 103 reads the product information with the product specifying information identical to the specified one from the recording device 104 and transmits the same to the product information outputting device 200. Thereafter, the process is finished.

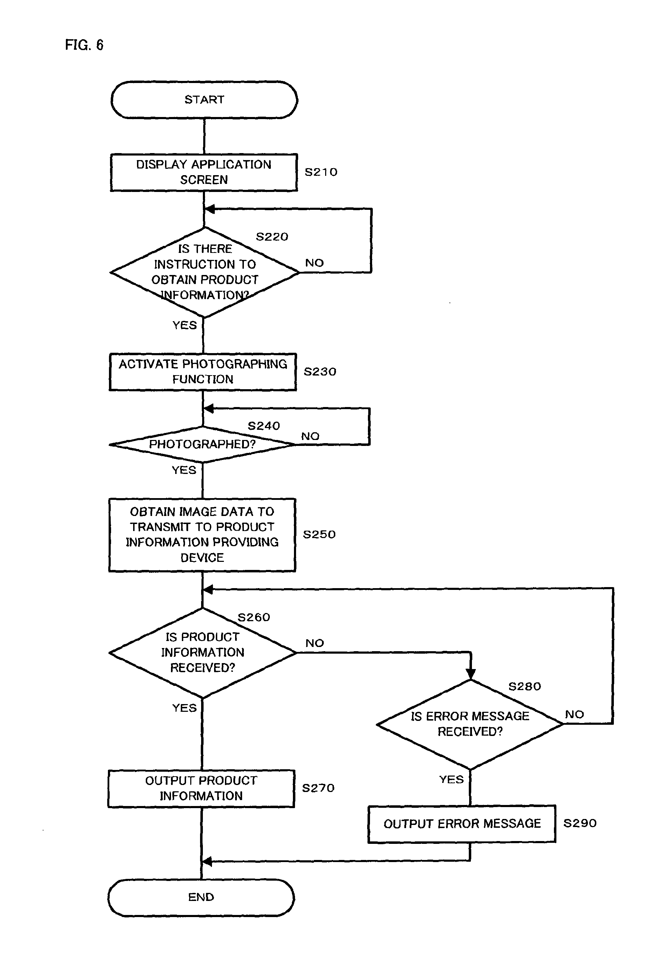

Fig. 6 is a flowchart of a flow of a product information outputting process executed by the product information outputting device 200 of this embodiment. The process illustrated in Fig. 6 is executed by the control device 203 as a program activated when the user issues an instruction to activate the product information application as described above.

In step S210, the control device 203 displays the application screen on the touch panel 201 to stand by for the operation by the user on the application screen. Thereafter, the procedure shifts to step S220.

In step S220, the control device 203 determines whether the instruction to obtain the product information is issued by the user on the application screen. When it is positively determined in step S220, the procedure shifts to step S230.

In step S230, the control device 203 activates the photographing function using the camera 206 to prompt the user to photograph the subj ect for specifying the product as described above. Thereafter, the procedure shifts to step S240.

In step S240, the control device 203 determines whether the user takes a photograph. When it is positively determined in step S240, the procedure shifts to step S250.

In step S250, the control device 203 captures the image data output from the camera 206 and transmits the image data obtained by photographing the subject for specifying the product to the product information providing device 100 through the communication module 202. Thereafter, the procedure shifts to step S260.

In step S260, the control device 203 determines whether the above-described productinformationis received from the product information providing device 100. When it is positively determined in step S260, the procedure shifts to step S270 and the control device 203 outputs to display the received product information on the touchpanel 201, then the process is finished. On the other hand, when it is negatively determined in step S260, the procedure shifts to step S280.

In step S280, the control device 203 determines whether the error message is received from the product information providing device 100. When it is negatively determined in step S280, the procedure shifts to step S260. On the other hand, when it is positively determined in step S280, the procedure shifts to step S290.

In step S290, the control device 203 notifies the user of the received error message by outputting to display the same on the touch panel 201 or outputting the same through the speaker 205. Thereafter, the process is finished.

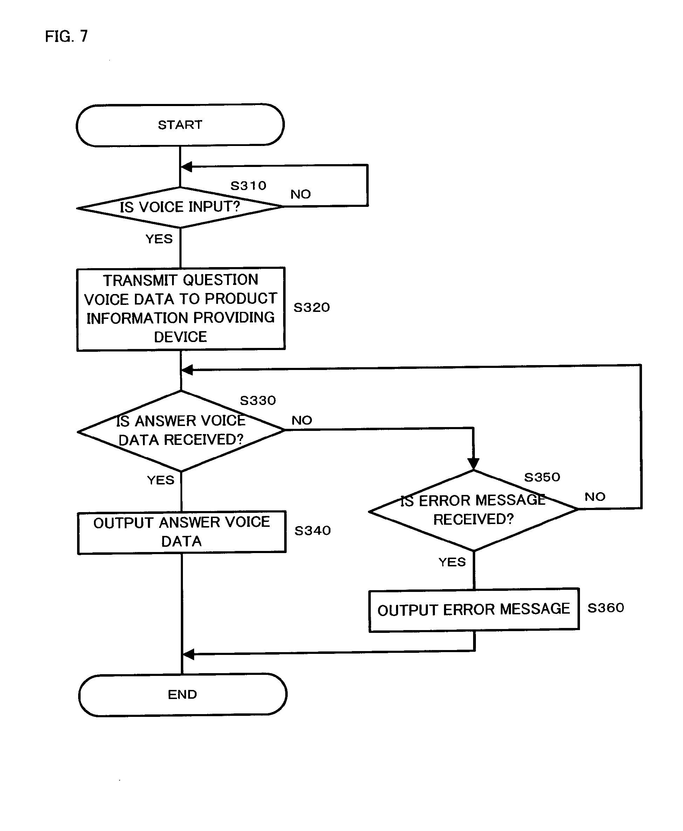

Fig. 7 is a flowchart of a flow of a questioning process executed by the product information outputting device 200 of a first embodiment. The process illustrated in Fig. 7 is executed by the control device 203 as a program activated when the instruction to start the question is issued by the user as described above.

In step S310, the control device 203 determines whether the question voice by the user is input through the microphone 204. When it is positively determined in step S310, the procedure shifts to step S320.

In step S320, the control device 203 records the input voice data on the buffer memory and thereafter transmits the same to the product information providing device 100 through the communication module 202. Thereafter, the procedure shifts to step S330.

In step S330, the control device 203 determines whether the voice data of the answer is received from the product information providing device 100. When it is positively determined in step S330, the procedure shifts to step S340.

In step S340, the control device 203 outputs the received voice data of the answer through the speaker 205. Thereafter, the process is finished.

On the other hand, when it is negatively determined in step S330, the procedure shifts to step S350. In step S350, the control device 203 determines whether the error message is received from the product information providing device 100. When it is negatively determined in step S350, the procedure returns to step S330. On the other hand, when it is positively determined in step S350, the procedure shifts to step S360.

In step S360, the control device 203 notifies the user of the received error message by outputting to display the same on the touch panel 201 or outputting the same through the speaker 205. Thereafter, the process is finished.

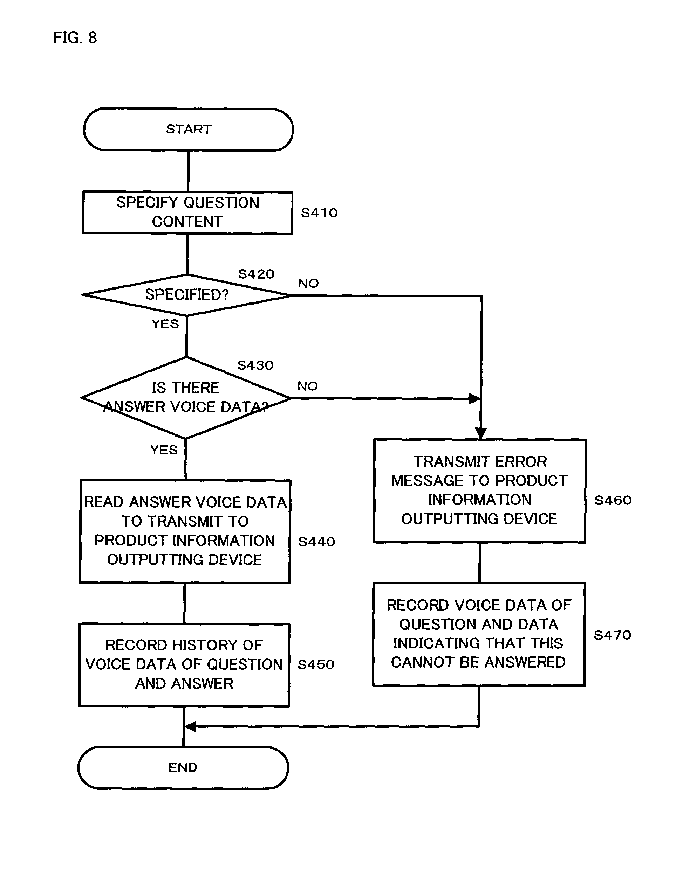

Fig. 8 is a flowchart of a flowof anansweringprocess executed by the product information providing device 100 of the first embodiment. The process illustrated in Fig. 8 is executed by the control device 103 as a program activated when the above-described voice data of the question is received from the product information outputting device 200.

In step S410, the control device 103 records the voice data received from the product information outputting device 200 on the buffer memory and thereafter specifies the question content from the voice data by using the well-known voice recognition technology as described above. Thereafter, the procedure shifts to step S420.

In step S420, the control device 103 determines whether the question content is specified by the process in step S410. When it is positively determined in step S420, the procedure shifts to step S430.

In step S430, the control device 103 determines whether the specified question content and the voice data of the answer associated therewith are recorded on the recording device 104. When it is positively determined in step S430, the procedure shifts to step S440.

In step S440, the control device 103 reads the voice data of the answer recorded in association with the question content specified in step S410 from the recording device 104 and transmits the same to the product information outputting device 200. Thereafter, the procedure shifts to step S450.

In step S450, the control device 103 associates the voice data of the question and the voice data of the answer to the question with each other and records them on the recording device 104. Thereafter, the process is finished.

On the other hand, when it is negatively determined in step S420 or it is negatively determined in step S430, the procedure shifts to step S460. In step S460, the control device 103 transmits the error message indicating that the voice recognition cannot be performed or that the question content cannot be specified to the product information outputting device 200. Thereafter, the procedure shifts to step S470.

In step S470, the control device 103 associates the voice data of the question recorded on the buffer memory and the data indicating that the question cannot be answered with each other and records them on the recording device 104 as described above. Thereafter, the process is finished.

According to the first embodiment described above, a following function effect may be obtained.
(1) In the product information outputting device 200, the control device 203 photographs the subject for specifying the product to obtain the image for specifying the product based on the instruction issued by the user and transmits the obtained image for specifying the product to the product information providing device 100 to request the product information of the product specified based on the product specifying image. Then, this receives the product information from the product informationproviding device 100 and outputs the receivedproduct information to present to the user. This also obtains the question from the user about the product information as the voice data, transmits the question voice data to the product information providing device 100 to request the answer to the question, and receives the voice data of the answer to the question from the product information providing device 100 as the answer voice data to output. In the product information providing device 100, the control device 103 receives the product specifying image from the product information outputting device 200, performs image processing of the receivedproduct specifying image to specify the product whose product information is wanted by the user and reads the product information of the specified product from the product information recorded on the recording device 104 in advance to transmit to the product information outputting device 200. Further, this receives the question voice data from the product information outputting device 200, specifies the question content from the user based on the received question voice data and reads the answer voice data recorded in association with the specified question content out of the information for response in which information indicating the supposed question content from the user and the answer voice data to the question are associated with each other recorded on the recording device 104 in advance to transmit to the product information outputting device 200. Accordingly, the user may check desired product information on the product information outputting device 200 and may ask a question by voice about the presented product information to obtain an answer thereto, thereby solving the point in doubt about the product information or checking the point to be checked easily as in a conversation on the spot. In the store, even in a situation in which the customer satisfaction level might be deteriorated due to a manpower shortage, lack of knowledge of an employee and the like, a customer may freely examine the product information or ask a question about the same without finding an attendant by the product information outputting device 200 installed, so that a customer service may be improved. Further, it is not necessary for the user to specify various retrieval conditions for obtaining the product information and it is only necessary to photograph the subject for specifying the product, so that he/she may receive the product information by simple operation.
(2) In the product information providing device 100, the control device 103 records the response data in which the voice data of the question by the user and the voice data of the answer to the question are associated with each other on the recording device 104. Accordingly, the history of the response data is accumulated in the recording device 104, so that the provider of the product information and the provider of the product information providing system 10 may grasp the question trend of the user about the product and the product information by referring to the history of the response data recorded on the recording device 104, thereby improving the content of the product information such that the user does not have to ask a question.
(3) In order to provide the product information to the product information outputting device 200, the product information is recorded on the recording device 104 of the product information providing device 100. In this case, in order to respond to the user request, it is required to make database of the product information of carried products to register on the recording device 104, so that unified management of the product information is realized by necessity. This might lead to creation of new employment, because it becomes necessary to hire a special staff for this work or an organization for undertaking the work is established for registration of the product information which might be troublesome.
(4) The product information provider inputs a variety of information about the product manufactured or sold by the provider's company as the product information on the terminal not illustrated and the product information includes at least one of the product specifying information for specifying the product, the price information of the product, the specification information of the product, the availability information of the product, the delivery time information of the product, the comparison information indicating the result of comparison between the product and another product, the 3D CAD data of the product, the information of the campaign for the product, the website information of the product, and the commercial video information of the product. In this case, in addition to general product information such as the product name, the price information, and the specification information, the product information provider may optionally add information which the user may be interested in such as the availability information and the delivery time information, and further information which the product information provider wants to positively provide such as the comparison information with other products and the campaign information to the product information. Therefore, it is possible to realize the system which may satisfy not a one-way information service in response to the request to provide the product information by the user but demand of both of the user and the product information provider in which the product information provider may control the information to be provided.

### Second Embodiment

A case in which the user asks the question about the product by voice after the product information received from the product information providing device 100 is displayed on the touch panel 201 to obtain the answer by voice from the product information providing device 100 is described in the above-described first embodiment. In this case, the user cannot use the product informationproviding system 10 inaplace in which it is difficult to make a voice or output the voice from the product information outputting device 200, for example. For example, in general, it is not preferable to ask a question by voice and receive an answer by voice in a car of a train or in a library. There also is a problem that a hearing-impaired person cannot use the system with which only the answer by voice can be obtained. Therefore, a product information providing system 10 of a second embodiment is configured such that a user may optionally select to ask a question by voice or by text and may optionally select to receive an answer by voice or by text. Meanwhile, the second embodiment is similar to the first embodiment for Figs. 1 to 6, so that the description thereof is not repeated; a point different from the first embodiment is herein mainly described.

In this embodiment, it is necessary for the user to set whether the question and answer are voice-based or text-based on a product information outputting device 200 before asking a question about a product. This setting may be optionally switched from a setting menu of the above-described product information application or it is also possible that a switching button is displayed on a screen on which product information received from a product information providing device 100 is displayed and the setting may be switched by operation of the switching button when the question about the product is asked. Alternatively, a switching instruction by voice from the user may be received.

When it is set to transmit/receive the question and answer by voice data by the user, a control device 203 executes the process described above in the first embodiment. On the other hand, when it is set to transmit/receive the question and answer by text data by the user, the control device 203 executes a process to be hereinafter described.

When the user issues an instruction to start the question after the product information received from the product information providing device 100 is displayed on a touch panel 201, the control device 203 displays a question inputting field on the touch panel 201 to enter a standby status for a text input on the touch panel 201. The text input on the touch panel 201 may be accepted by displaying an image representing a keyboard on the touch panel, for example, and detecting a touch position on a virtual keyboard to specify an input character. Alternatively, the text input may be accepted through an external keyboard not illustrated.

When the control device 203 detects that the text input is started by the user, this records input text data on a buffer memory and transmits the same to the product information providing device 100 through a communication module 202.

In the product information providing device 100, when a control device 103 detects that the text data of the question is received from the product information outputting device 200, this records the received text data on a buffer memory and thereafter specifies a question content from the text data by using well-known text recognition technology. For example, a standby word for text recognition is recorded on a recording device 104 in advance and the control device 103 executes a text recognition process using the standby word for the text data recorded on the buffer memory. As a result of matching to the standby word, a word included in the question content is extracted and the question content from the user is specified.

The control device 103 performs an answering process to the user according to the specified question content of the user. For example, information for response in which a supposed question content from the user and the text data of the answer to the same are associated with each other is recorded on the recording device 104 and when the specified question content is recorded on the recording device 104, the control device 103 reads the text data of the answer recorded in association with the question content to transmit to the product information outputting device 200. Meanwhile, if the text data of the answer recorded in association with the supposed question content from the user is text data of an answer content in which a customer-care technique at a department store and a conversation technique of a top salesperson are introduced as the voice data of the answer of the first embodiment, this may improve a customer satisfaction level.

Meanwhile, in the second embodiment, as described above, it is necessary for the control device 203 to execute the process described above in the first embodiment when it is set to transmit/receive the question and answer by the voice data by the user, and it is necessary to execute the process of this embodiment when it is set to transmit/receive the question and answer by the text data by the user. Therefore, in this embodiment, the information for response in a voice data format and that in a text data format should be recorded on the recording device 104. The control device 103 selects the information for response according to a data format of the question data to read the answer data.

In the product information outputting device 200, when the control device 203 receives the text data of the answer from the product information providing device 100, this outputs to display the received text data on the touch panel 201. Accordingly, the user may obtain the answer to the question from the product information providing device 100, thereby solving a point in doubt and the like.

The control device 103 of the product information providing device 100 records response data in which the text data of the question recorded on the buffer memory and the text data of the answer to the question are associated with each other on the recording device 104. Accordingly, a history of the response data is accumulated in the recording device 104. A provider of the product information and a provider of the product information providing system 10 may grasp a question trend of the user about the product and the product information by referring to the history of the response data recorded on the recording device 104, so that they may improve a content of the product information such that the user does not have to ask a question.

On the other hand, when the specified question content is not recorded on the recording device 104 or when the question content cannot be specified as a result of the text recognition process, the control device 103 of the product information providing device 100 transmits an error message indicating that the text recognition cannot be performed or that the question content cannot be specified to the product information outputting device 200. In the product information outputting device 200, when the control device 203 receives the error message from the product information providing device 100, this notifies the user of the received error message by outputting to display the same on the touch panel 201. Accordingly, the user may understand that the answer cannot be obtained from the product information providing device 100.

In this case also, the control device 103 associates the text data of the question recorded on the buffer memory and data indicating that the question cannot be answered with each other and records them on the recording device 104. Accordingly, the provider of the product information and the provider of the product information providing system 10 may grasp a history of the questions which cannot be answered, so that they may improve text recognition accuracy by reviewing the standby word and reviewing the text recognition process and may upgrade the system such that this may respond to more questions by adding the supposed questions and the answers thereto.

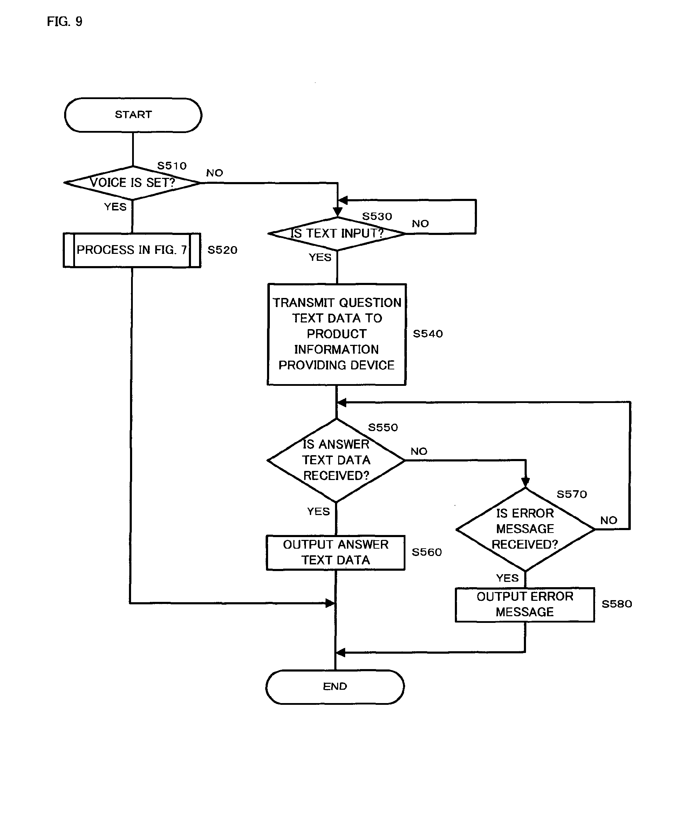

Fig. 9 is a flowchart of a flow of a questioning process executed by the product information outputting device 200 of the second embodiment. The process illustrated in Fig. 9 is executed by the control device 203 as a program activated when the user issues the instruction to start the question as described above.

In step S510, the control device 203 determines whether a transmitting/receiving method of the question and answer is set to the voice data. When it is positively determined in step S510, the procedure shifts to step S520 and the control device 203 executes the process described with reference to Fig. 7 in the first embodiment. On the other hand, when it is negatively determined in step S510, the procedure shifts to step S530.

In step S530, the control device 203 determines whether the question text is input by the user on the touch panel 201. When it is positively determined in step S530, the procedure shifts to step S540.

In step S540, the control device 203 records the input text data on the buffer memory and thereafter transmits the same to the product information providing device 100 through the communication module 202. Thereafter, the procedure shifts to step S550.

In step S550, the control device 203 determines whether the text data of the answer is received from the product information providing device 100. When it is positively determined in step S550, the procedure shifts to step S560.

In step S560, the control device 203 outputs to display the received text data of the answer on the touch panel 201. Thereafter, the process is finished.

On the other hand, when it is negatively determined in step S550, the procedure shifts to step S570. In step S570, the control device 203 determines whether the error message is received from the product information providing device 100. When it is negatively determined in step S570, the procedure returns to step S550. On the other hand, when it is positively determined in step S570, the procedure shifts to step S580.

In step S580, the control device 203 notifies the user of the received error message by outputting to display the same on the touch panel 201. Thereafter, the process is finished.

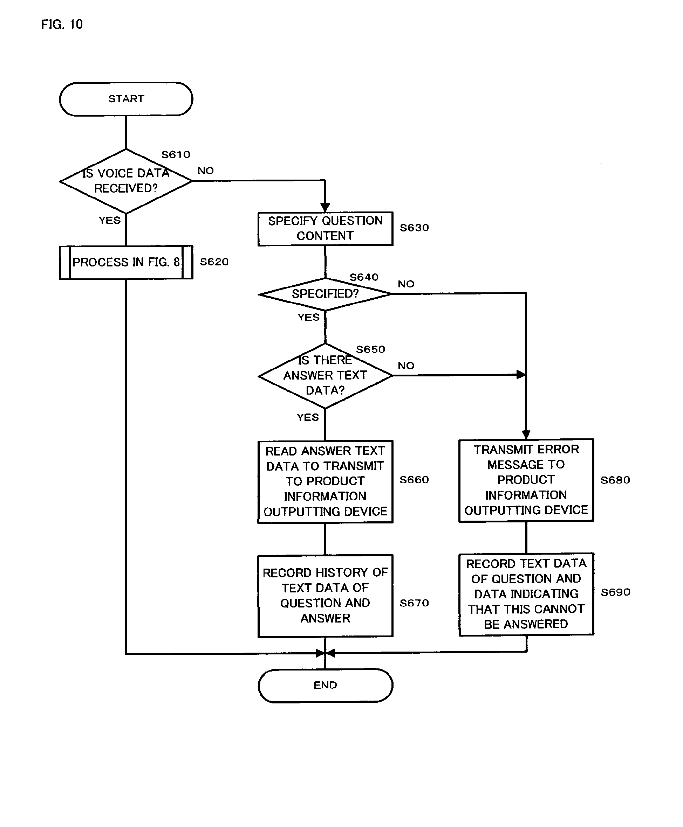

Fig. 10 is a flowchart of a flow of an answering process executed by the product information providing device 100 of the second embodiment. The process illustrated in Fig. 10 is executed by the control device 103 as a program activated when the above-described voice data or text data of the question is received from the product information outputting device 200.

In step S610, the control device 203 determines whether the data of the question received from the product information outputting device 200 is the voice data. When it is positively determined in step S610, the procedure shifts to step S620 and the control device 203 executes the process described with reference to Fig. 8 in the first embodiment. On the other hand, when it is negatively determined in step S610, the procedure shifts to step S630.

In step S630, the control device 103 records the text data received from the product information outputting device 200 on the buffer memory and thereafter specifies the question content from the text data by using the well-known text recognition technology as described above. Thereafter, the procedure shifts to step S640.

In step S640, the control device 103 determines whether the question content is specified by the process in step S630. When it is positively determined in step S640, the procedure shifts to step S650.

In step S650, the control device 103 determines whether the specified question content and the text data of the answer associated therewith are recorded on the recording device 104. When it is positively determined in step S650, the procedure shifts to step S660.

In step S660, the control device 103 reads the text data of the answer recorded in association with the question content specified in step S630 from the recording device 104 and transmits the same to the product information outputting device 200. Thereafter, the procedure shifts to step S670.

In step S670, the control device 103 associates the text data of the question and the text data of the answer to the question with each other and records them on the recording device 104. Thereafter, the process is finished.

On the other hand, when it is negatively determined in step S640 or it is negatively determined in step S650, the procedure shifts to step S680. In step S680, the control device 103 transmits the error message indicating that the text recognition cannot be performed or that the question content cannot be specified to the product information outputting device 200. Thereafter, the procedure shifts to step S690.

In step S690, the control device 103 associates the text data of the question recorded on the buffer memory and the data indicating that the question cannot be answered with each other and records them on the recording device 104 as described above. Thereafter, the process is finished.

According to the second embodiment described above, a following function effect may be obtained in addition to the function effect in the first embodiment. That is to say, the control device 203 of the product information outputting device 200 sets the data format selected from the voice data and the text data in which the question about the product information output on the touch panel 201 is accepted based on the instruction by the user and transmits the question data to the product information providing device 100 and receives the answer data from the product information providing device 100 in the set data format. Accordingly, the user may optionally switch between the voice and the text by which the product information providing system 10 is used according to whether it is in a situation in which an utterance and the voice output from the product information outputting device 200 are allowed.

A hearing-impaired person who has difficulty in voice-based communication may use the product information providing system 10 by selecting the text and a vision-impaired person who has difficulty in text-based communication may use the product information providing system 10 by selecting the voice. In this manner, the product information providing system 10 according to the second embodiment is made the system in which the voice-based and text-based question and answer may be performed, so that an extremely useful system also for a person with visual or hearing disability may be provided.

### Modified Examples

Meanwhile, the product information providing system of the above-described embodiments may also be modified as follows.
(1) In the above-described first embodiment, an example in which the control device 103 of the product information providing device 100 records the response data in which the voice data of the question by the user and the voice data of the answer to the question are associated with each other on the recording device 104 is described. In the above-described second embodiment, an example in which the control device 103 of the product information providing device 100 records the response data in which the text data of the question by the user and the text data of the answer to the question are associated with each other on the recording device 104 is described. A combination of the question and answer included in the response data recorded in this manner includes the content actually asked by the user before and the content of the answer thereto, so that it is highly possible that this is the content frequently asked by the user. Therefore, when the control device 103 receives the voice data or the text data of the question from the product information outputting device 200, this may first check whether there is the same question content in the history of the response data and when there is the same one, this may read the voice data or the text data of the answer corresponding to the same from the history of the response data to transmit to the product information outputting device 200. In this manner, if the data of the answer is preferentially read from the response data accumulated as the history, it is possible to answer based on a proven content to the previous question, so that improved answering accuracy may be realized. The data of the question may be retrieved from the history of the response data, so that response may be improved.
(2) In the above-described first embodiment, an example is described in which the information for response in which the supposed question content from the user and the voice data of the answer to the same are associated with each other is recorded on the recording device 104 and when the specified question content is recorded on the recording device 104, the control device 103 reads the voice data of the answer recorded in association with the question content to transmit to the product information outputting device 200. In the above-described second embodiment, an example is described in which the information for response in which the supposed question content from the user and the text data of the answer to the same are associated with each other is recorded on the recording device 104 and when the specified question content is recorded on the recording device 104, the control device 103 reads the text data of the answer recorded in association with the question content to transmit to the product information outputting device 200. At that time, it is possible to associate the voice data or the text data of one answer with one supposed question content from the user to make the information for response or associate the voice data or the text data of a plurality of answers with one supposed question content from the user to make the information for response. When the voice data or the text data of a plurality of answers are associated with one supposed question content from the user, it becomes possible to treat the user in a manner closer to actual customer care in consideration of a plurality of answers to one question as in a case in which an actual person answers to the question. Meanwhile, when a plurality of answer data to the specified question content is recorded, the control device 103 may read one data randomly selected therefrom to transmit to the product information outputting device 200.

Alternatively, the control device may determine a user satisfaction level to the previous answer content and preferentially read the answer data with a high satisfaction level. In this case, until certain data are collected, the control device 103 may randomly select the answer data from a plurality of answer data to transmit to the product information outputting device 200. In the product information outputting device 200, the control device 203 outputs the received answer data and thereafter confirms with the user whether he/she is satisfied with the answer content. For example, the control device 203 may output a confirmation message such as "Are you satisfied with this answer?" by voice or by text and prompt the user to answer "Yes" or "No" by voice or by text. When the control device 203 detects that the user answers "Yes", this transmits information indicating that the user is satisfied with the answer to the product information providing device 100. On the other hand, when the control device 203 detects that the user answers "No", this transmits information indicating that the user is not satisfied with the answer to the product information providing device 100.

In the product information providing device 100, when the control device 103 receives the above-described information indicating the satisfaction level of the user from the product information outputting device 200, this sets reading priority of the answer data based on the information indicating the satisfaction level. For example, when the control device 103 receives the information indicating that the user is satisfied with the answer as the information indicating the satisfaction level of the user, this sets 1 as the priority and associates priority information with the response data including the answer data to record. Thereafter, when this receives the information indicating that the user is satisfied with the answer for the answer data, this adds 1 to the priority information recorded in association with the response data including the answer data.

On the other hand, when the control device 103 receives the information indicating that the user is not satisfied with the answer as the information indicating the satisfaction level of the user, this sets -1 as the priority and associates the priority information with the response data including the answer data to record. Thereafter, when this receives the information indicating that the user is not satisfied with the answer for the answer data, this subtracts 1 from the priority information recorded in association with the response data including the answer data. Accordingly, the priority information at the time of reading is associated with each response data recorded as the history to be recorded.

When a plurality of answer data to the specified question content is recorded, the control device 103 may read the answer data whose priority is set high, that is to say, the voice data or the text data of the answer with a large numerical value recorded as the priority information to transmit to the product information outputting device 200.

When there is a plurality of questions and answers about the same product information between the product information outputting device 200 and the product information providing device 100, the control device 203 may ask the user about the satisfaction level for a series of questions and answers. For example, the control device 203 may output a message such as "Please answer on your satisfaction level for a series of answers in three levels of A to C." by voice or by text and prompt the user to answer "A", "B", or "C" by voice or by text. When the control device 203 detects that the user answers "A", this transmits information indicating that the satisfaction level of the user to a series of answers is "A" to the product information providing device 100. When the control device 203 detects that the user answers "B" , this transmits information indicating that the satisfaction level of the user to the series of answers is "B" to the product information providing device 100. When the control device 203 detects that the user answers "C", this transmits information indicating that the satisfaction level of the user to the series of answers is "C" to the product information providing device 100.

In the product information providing device 100, when the control device 103 receives the information indicating that the satisfaction level of the user to the series of answers is "A", this adds 1 to the priority information recorded in association with all the response data included in the series of questions and answers. When the control device 103 receives the information indicating that the satisfaction level of the user to the series of answers is "B" , this does not add to or subtract from the priority information recorded in association with all the response data included in the series of questions and answers. When the control device 103 receives the information indicating that the satisfaction level of the user to the series of answers is "C", this subtracts 1 from the priority information recorded in association with all the response data included in the series of questions and answers. Accordingly, when a plurality of questions is sequentially asked, the reading priority of the response data may also be set in consideration of the satisfaction level to the series of answers.

When the control device 103 receives the information indicating the satisfaction level of the user to the series of answers from the product information outputting device 200, this may further associate the priority information for the satisfaction level with a group of the series of response data to record. In this case also, it is possible to add to or subtract from the priority information recorded in association with the group of the response data depending on whether the received satisfaction level is "A" , "B", or "C". In this manner, persons in charge of the manufacturer and the dealer may grasp a flow of the questions asked by the user such as the content and order of the questions and the content of the answer thereto, and may understand the answer to the flow of the questions to improve the satisfaction level of the user. Therefore, it is possible to review the answer data recorded in association with the question data by changing the answer content and adding answer content variation, thereby further improving the user satisfaction level. Meanwhile, although an example of estimating the satisfaction level in three levels of "A", "B", and "C" is herein described, a method of estimating is not limited thereto and four-level or five-level estimation may also be performed.
(3) In the above-described first embodiment, an example in which the control device 103 of the product information providing device 100 records the history of the response data in which the voice data of the question by the user and the voice data of the answer to the question are associated with each other on the recording device 104 is described. In the above-described second embodiment, an example in which the control device 103 of the product information providing device 100 records the history of the response data in which the text data of the question by the user and the text data of the answer to the question are associated with each other on the recording device 104 is described. In this case, the control device 103 may transmit history information of the response data recorded on the recording device 104 to a terminal possessed by the company such as the manufacturer which provides the product about which the question is asked at predetermined timing set in advance, for example, at a predetermined time every day. For example, it is possible that an e-mail address of the person in charge of the company is registered in association with each product information and the control device 103 transmits the history information of the response data to the person in charge of the product about which the question is asked by e-mail. Accordingly, the company may grasp the question asked by the user about the product and the answer thereto and may use the same to develop a new product.
(4) In the above-described first and second embodiments, an example is described in which, when the specified question content is not recorded on the recording device 104 and it is not possible to read the answer data recorded in association with the question content, the control device 103 transmits the error message to the product information outputting device 200. However, when it is not possible to read the answer data recorded in association with the question content, the control device 103 may establish communication between a destination terminal registered in advance and the product information outputting device 200 and start a voice call or a text chat between an operator of the destination terminal and the user. Accordingly, when a question which the product information providing device 100 cannot handle is asked, it is possible to put the user through to the operator and the user may solve the point in doubt by asking the operator a question. Meanwhile, the user may also optionally select from the voice call and the text chat with the operator of the destination terminal. When it is applied to the invention according to the second embodiment, it is possible to switch between voice-based conversation and text-based conversation with the operator according to the data format out of the voice data and the text data in which the user wants to ask a question and obtain an answer.

In this case, it is also possible to record a voice call content and a chat content between the operator of the destination terminal and the user on the recording device 104. Accordingly, it is possible to use a history of communication between the user and the operator to improve the answer voice data or the answer text data and to improve an operator quality. The company may also use this to develop the new product.

Alternatively, when the control device 103 cannot read the answer data recorded in association with the question content, this may allow the user to select between immediate connection with the operator or contact from the operator when the answer is ready. When the user selects the immediate connection with the operator, as in the description above, the control device 103 may establish communication with the product information outputting device 200 to start the voice call or the text chat between the operator of the destination terminal and the user. On the other hand, when the user selects the contact from the operator when the answer is ready, the control device 103 may notify the destination terminal of the question from the user by transmitting the question voice data or text data by the user to the same. In the destination terminal which receives this, the operator may grasp the question content from the user from a content of the question voice data or text data and prepare the answer thereto, then call the product information outputting device 200 from the destination terminal to answer. Accordingly, the user may select from immediate conversation by call or by chat with the operator and the conversation by call or by chat with the operator when the answer is ready, so that convenience of the user may be improved. When the user selects the contact from the operator when the answer is ready, it is possible to prevent wasted waiting time when he/she has no time. Meanwhile, when the user selects the contact by voice from the operator when the answer is ready, the control device 103 may prompt the user to input a telephone number as a point of contact and transmit the input telephone number to the destination terminal. Accordingly, the operator may also answer the question by directly calling the user.

When the user decides to purchase the product as a result of the conversation with the operator, he/she may express his/her intention to purchase the product to the operator, and in this case, the operator may operate the destination terminal to display a product order screen on the product information outputting device 200 operated by the user. The user may input necessary information on the displayed product order screen, thereby ordering the product about which the user asks the operator the question. Alternatively, the operator may display a store list screen displaying a list of stores carrying the product which the user wants to purchase on the product information outputting device 200 operated by the user by operating the destination terminal depending on a user request. In this case, when the operator may specify a current position of the product information outputting device 200, this may extract only the stores within a predetermined range, for example, within a 1-km radius from the current position of the product information outputting device 200 to display on the store list screen.

Meanwhile, when there is the voice-based or text-based communication between the user and the operator, it is possible to use well-known video-phone technology to display a moving image of a partner photographed by a camera on a monitor of each terminal in real time.
(5) In the above-described first embodiment, an example is described in which, when the control device 103 receives the voice data of the question by the user from the product information outputting device 200, this reads the voice data of the answer to the question recorded on the recording device 104 to transmit to the product information outputting device 200. In the above-described second embodiment, an example is described in which, when the control device 103 receives the text data of the question by the user from the product information outputting device 200, this reads the text data of the answer to the question recorded on the recording device 104 to transmit to the product information outputting device 200. However, it may also be considered that the user asks a question about the content included in the product information already transmitted to the product information outputting device 200. When the answer to the question content from the user is included in the already transmitted product information in this manner, the control device 103 may read voice data or text data for giving notice that the answer to the question content is included in the product information from the recording device 104 as the answer data to transmit to the product information outputting device 200. Accordingly, it is possible to answer the question of the user by using the already transmitted product information.
(6) In the above-described first embodiment, an example in which the user may input the question content by voice and obtain the answer thereto by voice is described. In the above-described second embodiment, an example in which the user may input the question content by text and obtain the answer thereto by text is described. Accordingly method, the user may ask a question about the product information as if he/she has a conversation with the product information outputting device 200. In the present invention, this is further developed; the control device 203 may display vision of a person in the touch panel 201 and control operation of the vision of the person as if the person talks of the answer data. Accordingly, the user may ask a question about the product information as if he/she talks with a virtual person displayed in the touch panel 201.

In order to obtain further reality, the control device 203 may also display stereoscopic vision of a person in a real space and control operation of the person of the stereoscopic vision as if the person talks of the answer data. Accordingly, the user may ask a question about the product information as if he/she talks with a virtual person appearing in the real space. Further, when the stereoscopic vision of the person is displayed in the real space in this manner, it is possible to ask the virtual person appearing in the real space the question to get the answer, so that the person may be used as a virtual attendant (digital attendant). It is difficult for the manufacturer and the dealer of the product to find the user interested in the product to actually send in the salesperson and the like; however, the digital attendant is displayed on the product information outputting device 200 operated by the user interested in the product, so that it is possible to instantly send in the digital attendant serving as the salesperson acting under a sales strategy to the user.

It is also possible to apply the product information outputting device 200 to a robot and control operation of the robot as if the robot talks of the answer data. Accordingly, the user may ask a question about the product information as if he/she talks with the robot in front of him/her. If the company which introduces the product information providing system 10 installs the robot whose appearance is a shape of a character of the company in store front, this may also exert an advertising effect.
(7) In the above-described first and second embodiments, an example is described in which, in the product information outputting device 200, the control device 203 transmits the image data of the subject for specifying the product photographed by the user to the product information providing device 100 to obtain the product information from the product information providing device 100 and provides the same to the user. An example in which the product information providing device 100 transmits the product information upon request from the product information outputting device 200 is described. However, in the product information providing system 10, the user may also order the product after checking the product information on the product information outputting device 200. In this case, it may be configured such that an order button and the like is displayed on the screen on which the product information is displayed, for example, and when the control device 203 detects that the order button is touched by the user, this prompts the user to input information necessary for the order and transmits the same to the product information providing device 100 as order information. In the product information providing device 100, the control device 103 may accept the order for the product by receiving the order information from the product information outputting device 200 and transmit payment information for paying for the ordered product to the product information outputting device 200 based on a content of an accepted order for the product. In the product information outputting device 200, the control device 203 may display a payment screen of the product ordered by the user on the touch panel 201 based on the payment information received from the product information providing device 100 and transmit the information input on the payment screen to the product information providing device 100 to make payment. Accordingly, the user may also order the product by operating the product information outputting device 200.

Alternatively, the user may check the store in which the product may be purchased after checking the product information on the product information outputting device 200. In this case, it may be configured such that a store list button and the like is displayed on the screen on which the product information is displayed, for example, and when the control device 203 detects that the store list button is touched by the user, this requests the product information providing device 100 to transmit the store list. When the product information outputting device 200 requests the product information providing device 100 to transmit the store list, the control device 103 may specify the store having the product in stock based on the availability information included in the product information of the product whose store list is requested and transmit list information of the specified stores to the product information outputting device 200. In this case, when the control device 103 may specify the current position of the product information outputting device 200, this may extract only the stores within a predetermined range, for example, within a 1-km radius from the current position of the product information outputting device 200 to transmit the store list information. Accordingly, the user may grasp the store carrying the product which the user wants to purchase. Further, if it is configured such that, when the user expresses to the store his/her intention to purchase in advance, an already wrapped product is prepared when the user arrives at a counter, the user convenience may be further improved. In this case, the control device 103 may transmit the store list information including the store having no stock of the product to the product information outputting device 200. Accordingly, the user may grasp the store carrying the product which he/she wants to purchase, although this is currently out of stock.
(8) In the above-described first and second embodiments, the company such as the manufacturer which manufactures the product and the dealer which sells the product, and the company which provides the service are supposed as the provider of the product information. As the user who receives the product information, the consumer who wants to purchase the product and the consumer interested in the product are supposed; an example in which the product information outputting device 200 is installed in store front of the store selling the product whose product information is provided by the product information providing device 100 is described. In this case, for example, the product information outputting device 200 is installed at a department store, a supermarket, a home appliance mass retailer, a private store and the like and the user may operate the product information outputting device 200 to obtain the information of the product carried in the stores. However, it is possible to use the product information providing system 10 according to the present invention also in an industry other than retail industries. An example thereof is hereinafter described.

For example, in a vehicle industry, it is possible to solve a manpower shortage in a showroom by installing the product information outputting device 200 in the showroom by introducing the product information providing system 10 according to the present invention. When a terminal possessed by a user is made the product information outputting device 200, the user may obtain product information of a vehicle only by photographing an image of the vehicle running on a road and accessing to the product information providing device 100. It is also possible to ask a question about the vehicle.

When the product information outputting device 200 is installed at a movie or theater ticket counter, a user may grasp performers and a scenario of a movie or a play as product information and may further ask a question about the movie and the play.

In a cosmetic industry, when a terminal possessed by a user is made the product information outputting device 200, the user may obtain product information of cosmetics at home. By sending an image of his/her own skin and the like at the time when asking a question, it is possible to apply to a system to diagnose a condition of the skin by the product information providing device 100 and answer by voice data of a recommended product and advice about the skin.

When this system is introduced into a publishing industry, a user may easily obtain information of a product previously obtained from a mail order catalog and the like by photographing information for specifying the product appearing in all books including a digital book such as an existing fashion magazine, hobby and entertainment magazines and the like as a subject, thereby purchasing the product.

When this system is introduced into a home delivery industry, delivery information of a package is recorded on the product information providing device 100 as product information and a user may confirm the delivery information of the package by photographing a delivery number and the like indicated on a delivery ticket to make inquiries about the product information by operating the product information outputting device 200. When the user has a question about displayed delivery information, he/she may also ask the question by voice or by text to obtain an answer thereto. Accordingly, although it is currently general to input the delivery number on a screen to make inquiries about a delivery condition, the user may make inquiries only by photographing, so that a troublesome input operation may be omitted. An inputting error of a ticket number may also be avoided.
(9) In the above-described first embodiment, an example in which the control device 103 of the product information providing device 100 records the history of the response data in which the voice data of the question by the user and the voice data of the answer to the question are associated with each other on the recording device 104 is described. In the above-described second embodiment, an example in which the control device 103 of the product information providing device 100 records the history of the response data in which the text data of the question by the user and the text data of the answer to this question are associated with each other on the recording device 104 is described. The response data may be recorded for each user. For example, when a user ID and the like for uniquely specifying the user is issued, and if the control device 203 asks the user to log in by using the user ID when activating the above-described product information application and transmits also the user ID when transmitting the image data for specifying the subject and the data of the question to the product information providing device 100, it becomes possible that the product information providing device 100 uniquely specifies the user. By recording the response data for each user in this manner, the provider of the product information may grasp the question trend and the product which the user is interested in for each user. The control device 103 may also record a transmission history of the product information for each user. Accordingly, the provider of the product information may grasp the product which each user is interested in.
(10) In the above-described first and second embodiments, an example in which the information for response in which the supposed question content from the user and the answer data thereto are associated with each other is recorded on the recording device 104 is described. The information for response maybe prepared in a language of a country introducing the product information providing system 10 or may accommodate a plurality of languages. When this accommodates a plurality of languages, the information for response in all the languages in which the question might be asked may be prepared to be recorded on the recording device 104 or it is also possible that only the information for response in a specific language such as in Japanese and English is prepared and other languages are supported by translation by using well-known computer translation technology.
(11) In the above-described first and second embodiments, when the control device 103 of the product information providing device 100 cannot specify the product because the subject cannot be extracted from the received image data, this transmits the error message indicating that the product cannot be specified to the product information outputting device 200. An example is described in which, in the product information outputting device 200, when the control device 203 receives the error message from the product information providing device 100, this notifies the user of the received error message by outputting to display the same on the touch panel 201 or outputting the same through the speaker 205. However, when the control device 103 cannot specify the product based on the received image data, this also may transmit a text message or a voice message for prompting the user to ask a question by voice to the product information outputting device 200 to accept the question from the user. For example, when the control device 103 receives the image data obtained by photographing a name and a logo of the manufacturer and the store as the subject by the user, this may specify the manufacturer and the store based on the subject and output the text message or the voice message appropriate to the specified manufacturer and the store as the message to promote the question.
(12) In the above-described first embodiment, the control device 103 records the response data in which the voice data of the question recorded on the buffer memory and the voice data of the answer to the question are associated with each other on the recording device 104. In the above-described second embodiment, the control device 103 records the response data in which the text data of the question recorded on the buffer memory and the text data of the answer to the question are associated with each other on the recording device 104. In this case, it is also possible that a camera for photographing an expression of the user when he/she asks a question is mounted on the product information outputting device 200 and the control device 203 takes a still image or a moving image of the expression of the user by the camera while the user asks the question. The control device 203 may transmit still image data or moving image data of the expression of the user to the product information providing device 100 together with the voice data and text data of the question. The control device 103 may add the still image data or the moving image data received from the product information outputting device 200 to the response data to record. Accordingly, the provider of the product information and the provider of the product information providing system 10 may check the expression of the user at the time of question and estimate the satisfaction level of the user for the provided product information and the product information providing system 10 from the expression. When the image data obtained by photographing a face of the user is registered in advance, it is possible to confirm whether the user who asks the question is an already registered user by image recognition, thereby preventing spoofing and allowing the product information outputting device 200 to serve as a security camera.
(13) In the above-described second embodiment, an example is described in which the control device 103 and the control device 203 execute the process described above in the first embodiment when the user sets to transmit/receive the question and answer by the voice data on the product information outputting device 200 and execute the process described above in the second embodiment when the user sets to transmit/receive the question and answer by the text data. That is to say, in the second embodiment, the user sets whether to use the voice or the text for the combination of the question and answer. However, the user may also separately set for the question and the answer.

In this case, when the user sets to ask a question and obtains an answer by voice, the control device 103 and the control device 203 may execute the process described above in the first embodiment, and when the user sets to ask the question and obtains the answer by text, they may execute the process described above in the second embodiment. When the user sets to ask the question by voice and obtain the answer by text, the control device 103 and the control device 203 may execute the process described above in the first embodiment for the process regarding the question and may execute the process described above in the second embodiment for the process regarding the answer. On the other hand, when the user sets to ask the question by text and obtain the answer by voice, the control device 103 and the control device 203 may execute the process described above in the second embodiment for the process regarding the question and may execute the process described above in the first embodiment for the process regarding the answer.

For example, in a situation in which the utterance is allowed and the voice may be output from the product information outputting device 200 without problem, the user may set to ask the question and obtain the answer by voice. In a situation in which the utterance and the voice output from the product information outputting device 200 are wanted to be avoided, the user may set to ask the question and obtain the answer by text. In a situation in which the utterance is allowed but the output of the voice from the product information outputting device 200 is not preferable, the user may set to ask the question by voice and obtain the answer by text. In a situation in which the utterance by the user is not allowed but the voice may be output from the product information outputting device 200 without problem, the user may set to ask the question by text and obtain the answer by voice.
(14) In the above-described first embodiment, an example is described in which, when the control device 103 detects that the voice data of the question is received from the product information outputting device 200, this specifies the question content from the voice data by using the well-known voice recognition technology. In the second embodiment, an example is described in which, when the control device 103 detects that the text data of the question is received from the product information outputting device 200, this specifies the question content from the text data by using the well-known text recognition technology. In this case, the control device 103 may transmit the specified question content to the product information outputting device 200 in the format of the received question data, that is to say, the voice data format or the text data format. In the product information outputting device 200, the control device 203 may output the question content data received from the product information providing device 100 to confirm with the user whether a specified result is correct. When the user responds that this is correct, the information is transmitted to the product information providing device 100, and in this case, the control device 103 may fix the specified question content. On the other hand, when the user responds that this is not correct, the information is transmitted to the product information providing device 100, and in this case, the control device 103 may cancel the specified question content. When the user responds that this is not correct, the control device 203 may prompt the user to input the question again. Accordingly, an irrelevant answer by the control device 103 based on an erroneously specified question content may be avoided. It is also possible to direct the user to a flow of the question and answer supposed by the company.

The control device 103 may also extract a plurality of words with high degree of coincidence by the voice recognition with order of priority according to the degree of coincidence at the time of voice recognition of the question data and specify a plurality of question contents as candidates based on the words. At that time, it is possible to assign the order of priority according to the word on which the extraction is based for each of the specified question contents. When the control device 103 first transmits the question content with the highest order of priority to the product information providing device 100 and confirms with the user, and when the user responds that this is not correct, this may transmit the question content with the second highest order of priority to the product information providing device 100 to confirm with the user. Herein, the number of candidates of the question content to be specified may be set in advance. Accordingly, it is possible to avoid the irrelevant answer by the control device 103 based on the erroneously specified question content and, by presenting a plurality of candidates in order according to the order of priority, it is possible to realize a highly convenient system without the need of the utterance by the user again and again. It is also possible to direct the user to the flow of the question and answer supposed by the company.
(15) In the above-described second embodiment, an example in which the information for response in the voice data format and the information for response in the text data format are recorded on the recording device 104 so as to handle both of the question and answer by voice and the question and answer by text is described. However, it is also possible that only one of the information for response in the voice data format and that in the text data format is recorded and when it is required to handle in the other data format, the data format of the question content specified based on the voice data of the question is converted to the same data format as that of the information for response by using a well-known conversion program to convert from the voice data to the text data or from the text data to the voice data. Accordingly, it becomes possible to reduce a data amount recorded on the recording device 104 as compared to a case in which the information for response is recorded in both of the voice data format and in the text data format. When the information for response in the voice data format and the information for response in the text data format are recorded, maintenance such as addition, compilation, and deletion of information is required for both of them and when the maintenance is one-sided, improvement in response accuracy might be one-sided or there might be a discrepancy in answer content between the voice and the text. However, when the information for response is in any one of the voice data format or the text data format to be comprehensively maintained, such a problem may be solved and the maintenance of the information for response becomes easier.

Alternatively, it is also possible that the information for response in the voice data format and the information for response in the text data format are recorded on the recording device 104 and the information for response in the voice data format and the information for response in the text data format are synchronized with each other by using the above-described conversion program at regular intervals. Accordingly, it becomes possible to prevent the discrepancy between the information for response in the voice data format and the information for response in the text data format.

Meanwhile, the present invention is not at all limited to the configuration of the above-described embodiments unless the characteristic function of the present invention is not lost. The above-described embodiments and a plurality of modified examples may be combined.

The disclosed content of the following priority basic application is herein incorporated by reference.
Japanese Patent Application No. 2012-227502 (filed on October 12, 2012)
Japanese Patent Application No. 2012-263896 (filed on December 1, 2012)

### Reference Signs List

- 10: product information providing system
- 100: product information providing device
- 101: operating member
- 102: connection I/F
- 103: control device
- 104: recording device
- 105: display device
- 200: product information outputting device
- 201: touch panel
- 202: communication module
- 203: control device
- 204: microphone
- 205: speaker
- 206: camera

## Claims

1. A product information providing system in which a product information providing device which provides product information and a product information outputting device which receives the product information from the product information providing device to output are connected to each other through a communication line, wherein
the product information outputting device includes:
product specifying image obtaining means for photographing a subj ect for specifying a product to obtain a product specifying image based on an instruction by a user;
product information requesting means for transmitting the product specifying image obtained by the product specifying image obtaining means to the product information providing device to request product information of a product specified based on the product specifying image;
product information receiving means for receiving the product information from the product information providing device;
product information presenting means for outputting the product information received by the product information receiving means to present to the user;
question data obtaining means for obtaining question data from the user about the product information output by the product information presenting means;
answer requesting means for transmitting the question data obtained by the question data obtaining means to the product information providing device to request an answer to a question;
answer receiving means for receiving answer data to the question from the product information providing device; and
answer data outputting means for outputting the answer data received by the answer receiving means, and
the product information providing device includes:
product specifying image receiving means for receiving the product specifying image from the product information outputting device;
product specifying means for performing image processing of the product specifying image received by the product specifying image receiving means to specify the product whose product information the user wants to obtain;
product information reading means for reading the product information of the product specified by the product specifying means from the product information recorded on a recording device in advance;
product information transmitting means for transmitting the product information read by the product information readingmeans to the product information outputting device;
question data receiving means for receiving the question data from the product information outputting device;
question content specifying means for specifying a question content from the user based on the question data received by the question data receiving means;
answer data reading means for reading the answer data recorded in association with the question content specified by the question content specifying means from information for response in which information indicating a supposed question content from the user and the answer data to the question are associated with each other recorded on the recording device in advance; and
answer data transmitting means for transmitting the answer data read by the answer data reading means to the product information outputting device.

2. The product information providing system according to claim 1, wherein
the product information outputting device further includes :
data setting means for setting a data format out of voice data and text data in which the question about the product information output by the product information presenting means is accepted based on an instruction by the user,
the question data obtaining means obtains the question data in the data format set by the data setting means, and
the answer requesting means transmits the question data obtained by the question data obtaining means to the product information providing device to request the answer to the question in the data format set by the data setting means.

3. The product information providing system according to claim 2, wherein
information for response in a voice data format for responding to the question by the voice data and information for response in a text data format for responding to the question by the text data are recorded on the recording device, and
the answer data reading means selects the information for response corresponding to the data format of the question data to read the answer data recorded in association with the question content specified by the question content specifying means from the selected information for response.

4. The product information providing system according to claim 3, wherein
the product information providing device further includes:
synchronizing means for synchronizing the information for response in the voice data format with the information for response in the text data format recorded on the recording device.

5. The product information providing system according to claim 2, wherein
any one of information for response in a voice data format for responding to the question by the voice data and information for response in a text data format for responding to the question by the text data is recorded on the recording device, and
when the data format of the question content specified by the question content specifying means is different from the data format of the information for response, the answer data reading means converts the data format of the question content to the data format of the information for response and reads the answer data recorded in association with the question content specified by the question content specifying means from the information for response.

6. The product information providing system according to any one of claims 1 to 5, wherein
the question content specifying means transmits data of the specif ied question content to the product information outputting device, and fixes the specified question content when receiving information indicating that the specified question content is correct from the product information outputting device.

7. The product information providing system according to any one of claims 1 to 6, wherein
the product information providing device further includes:
response history information recording means for recording history information of response data in which the question data received from the product information outputting device and the answer data to the question data are associated with each other on the recording device, and
when the question data is recorded on the recording device as the history information, the answer data reading means preferentially reads the answer data from the history information.

8. The product information providing system according to claim 7, wherein
the product information providing device further includes:
satisfaction level information receiving means for receiving information indicating a satisfaction level of the user with the transmitted answer data from the product information outputting device; and
priority setting means for setting reading priority of the answer data based on the information indicating the satisfaction level received by the satisfaction level information receiving means,
the response history information recording means records information indicating the reading priority of the answer data set by the priority setting means on the recording device in association with the response data, and
the answer data reading means preferentially reads the answer data whose priority is set high when the question data is recorded on the recording device as the history information.

9. The product information providing system according to claim 7 or 8, wherein
the response history information recording means records the history information of the response data for each user.

10. The product information providing system according to any one of claims 7 to 9, wherein
the product information providing device further includes:
history information transmitting means for transmitting the history information recorded on the recording device to a terminal possessed by a company which provides the product about which the question is asked.

11. The product information providing system according to any one of claims 1 to 10, wherein:
the product information providing device further includes:
dialogue means for establishing communication between a destination terminal registered in advance and the product information outputting device to start communication by voice or by text between an operator of the destination terminal and the user when the answer data recording means cannot read the answer data recorded in association with the question content specified by the question content specifying means.

12. The product information providing system according to claim 11, wherein
the product information providing device further includes:
communication content recording means for recording a communication content by voice or by text between the operator of the destination terminal and the user on the recording device.

13. The product information providing system according to any one of claims 1 to 12, wherein
the product information providing device further includes:
determining means for determining whether the answer to the question content from the user specified by the question content specifying means is included in the product information transmitted by the product information transmitting means, and
when the determining means determines that the answer is included in the product information, the answer data reading means reads data for providing notification that the answer to the question content is included in the product information from the recording device as the answer data.

14. The product information providing system according to any one of claims 1 to 13, wherein
the product information outputting device further includes :
first vision displaying means for displaying vision of a person in a display device; and
operation controlling means for controlling operation of person vision as if the person vision displayed by the first vision displaying means talks of the answer data.

15. The product information providing system according to any one of claims 1 to 14, wherein
the product information outputting device further includes :
second vision displaying means for displaying stereoscopic vision of a person in a real space; and
operation controlling means for controlling operation of the person of the stereoscopic vision as if the person of the stereoscopic vision displayed by the second vision displaying means talks of the answer data.

16. The product information providing system according to any one of claims 1 to 15, wherein
the product information providing device further includes:
order accepting means for accepting an order for the product specified by the product specifying means from the product information outputting device.

17. The product information providing system according to claim 16, wherein
the product information providing device further includes:
payment information transmitting means for transmitting payment information for paying for an ordered product to the product information outputting device based on a content of an accepted order for the product when the order accepting means accepts the order for the product, and
the product information outputting device further includes :
payment screen displaying means for displaying a payment screen of the product ordered by the user on the display device based on the payment information received from the product information providing device.

18. The product information providing system according to any one of claims 1 to 17, wherein
the product information outputting device is a terminal installed in a store which sells the product or a portable terminal possessed by the user.

19. The product information providing system according to any one of claims 1 to 18, wherein
the product specifying image is any one of an image in which a character string for specifying the product is the subject for specifying the product, an image in which a figure for specifying the product is the subj ect for specifying the product, an image in which the product itself is the subj ect for specifying the product, an image in which a solid object representing the product is the subject for specifying the product, and an image in which an installation on which a figure representing a shape of the product is drawn is the subj ect for specifying the product, and
the product specifying means specifies the product whose product information the user wants to obtain by extracting the subject for specifying the product from the product specifying image by performing image processing of the product specifying image and matches the subj ect to subj ect data recorded in advance.

20. The product information providing system according to any one of claims 1 to 19, wherein
the product information includes at least one of price information of the product, specification information of the product, availability information of the product, delivery time information of the product, comparison information indicating a result obtained by comparing the product with another product, 3D CAD data of the product, information of campaign performed for the product, website information of the product, and commercial video information of the product.

21. The product information providing system according to claim 20, wherein
the product information providing device further includes:
store list request accepting means for accepting a transmission request of a list of stores having the product in stock from the product information outputting device;
product-carrying store specifying means for specifying a store carrying the product based on the availability information of the product when the transmission request of the list of stores is accepted by the store list request accepting means; and
store list transmitting means for transmitting a list of stores specified by the product-carrying store specifying means to the product information outputting device.

22. The product information providing system according to any one of claims 1 to 21, wherein
when the question content specifying means extracts a plurality of candidates of the question content from the user based on the question data received by the question data receiving means, the question content specifying means presents the plurality of candidates in order to the user based on order of priority of the plurality of candidates and specifies the question content from the user based on a response of the user to the candidates.

23. The product information providing device according to any one of claims 1 to 22.

24. The product information outputting device according to any one of claims 1 to 22.
